# EUROPEAN PATENT SPECIFICATION

(11) **EP 3 863 246 B1**
(45) Date of publication and mention of the grant of the patent: **04.10.2023**
(21) Application number: 20217406.6
(22) Date of filing: 06.08.2015
(51) Int. Cl.: H04L 47/20, H04L 45/24, H04L 67/63

(54) **SERVICE TRAFFIC PROCESSING METHOD AND APPARATUS**
DIENSTVERKEHRVERARBEITUNGSVERFAHREN UND -VORRICHTUNG
PROCÉDÉ ET APPAREIL DE TRAITEMENT DE TRAFIC DE SERVICE

(30) Priority: 01.09.2014 CN 201410440555
(43) Date of publication of application: 11.08.2021
(62) Divisional of application: 15838816.5
(73) Proprietor: HUAWEI TECHNOLOGIES CO., LTD., Shenzhen, Guangdong 518129 (CN)
(72) Inventor: DING, Shenyu, Shenzhen, 518129 (CN); LIN, Guanghui, Shenzhen, 518129 (CN); CAI, Wenjuan, Shenzhen, Guangdong 518129 (CN)
(74) Representative: Pfenning, Meinig & Partner mbB

(56) References cited:
- EP-A1- 2 728 802
- EP-B1- 2 728 802
- WO-A1-2009/132548
- LEYMANN C HEIDEMANN DEUTSCHE TELEKOM AG M WESSERMAN PAINLESS SECURITY X XUE D ZHANG HUAWEI N: "Hybrid Access Network Architecture; draft-lhwxz-hybrid-access-network-architec ture-00.txt", HYBRID ACCESS NETWORK ARCHITECTURE; DRAFT-LHWXZ-HYBRID-ACCESS-NETWORK-ARCHITEC TURE-00.TXT, INTERNET ENGINEERING TASK FORCE, IETF; STANDARDWORKINGDRAFT, INTERNET SOCIETY (ISOC) 4, RUE DES FALAISES CH- 1205 GENEVA, SWITZERLAND, 25 June 2014 (2014-06-25), pages 1-10, XP015099776, [retrieved on 2014-06-25]

## Description

### TECHNICAL FIELD

Embodiments of the present invention relate to communications technologies, and in particular, to service traffic processing methods, a home gateway, HG, a hybrid access aggregation point, HAAP, a system comprising the HG and the HAAP and a computer-readable storage medium.

### BACKGROUND

Currently, a data subscriber line (Digital Subscriber Line, DSL for short) tunnel is mainly provided for a home gateway (Home Gateway, HG for short) user to transmit service traffic. However, the DSL-only link cannot meet a requirement of the HG user for transmitting high-bandwidth service traffic.

To meet the requirement that the HG user can transmit high-bandwidth service traffic, in the prior art, a DSL link and a Long Term Evolution (Long Term Evolution, LTE for short) link may be bonded by using a hybrid access (Hybrid Access, HA for short) technology, to form a hybrid access aggregation point (Hybrid Access Aggregation Point, HAAP for short) tunnel, that is, the HAAP tunnel includes one GRE over DSL link and one GRE over LTE link, so as to implement transmission of vast-traffic service traffic by using the DSL-only link and/or the HAAP tunnel. Specifically, a process of establishing the HAAP tunnel is as follows: An HG sends a Tunnel Setup Request message to an HAAP server, and the HAAP server establishes an HAAP tunnel according to an LTE address and a DSL address in the Tunnel Setup Request message. The LTE address is a destination address for establishing a GRE over LTE link, and the DSL address is a destination address for establishing a GRE over DSL link.

In addition, the HG mainly transmits service traffic in an equal division manner or an idle manner. That is, the service traffic is separately transmitted by using a DSL-only link and an HAAP tunnel after the service traffic is equally divided, or the service traffic is transmitted by using an idle tunnel when a DSL-only link or an HAAP tunnel is idle. However, for service traffic of a service that has a relatively high requirement for real-time performance, for example, for service traffic of a voice service, if the service traffic is transmitted by using a DSL-only link or an HAAP tunnel in an equal division manner or an idle manner, voice quality is relatively poor. It can be learned that the current HG cannot implement fine control of service traffic transmission.

Document WO2009/132548 A1 provides a strategy determining function entity, Home Gateway, service quality controlling method and the system thereof have been disclosed. The service quality controlling method comprises the steps of : receiving the service request or the service quality strategy rules request sent by Home Gateway or by Home Gateway collocation unit; performing authorization and determination to the service request, determining the service quality strategy rules corresponding to the service requested by the service request based on the service identifier carried by the service request; or performing authorization and determination for the service quality strategy rules request, determining the service quality strategy rules corresponding to the service controlled by the Home Gateway based on the Home Gateway position information, Home Gateway identifier and the terminal identifier carried by the service quality strategy rules request; sending the determined service quality strategy rules to the Home Gateway which is used for distributing the service quality resource to the service request. The embodiments of the present invention solve the problem of the dynamic service quality control in Customer Premises Network.

Document EP2728802A1 provides a method for network controlled optimization of the hybrid access traffic management for a residential user connected via a hybrid access home gateway, which provides at least two different network links with different technology to a core network, wherein the core network has a connection to the internet, wherein in the core network a Hybrid Access Server is located, which has a connection to the to the hybrid access enabled home gateway, over the two network links, comprising the steps wherein by using the following information available from the fixed and mobile access and aggregation networks comprising the steps : - extracting by the Hybrid Access Server one or more of the following information : Network link availability, Network link utilization, Quality of Service information with respect to the services requested from the home gateway; - selection of networks links, selection of the network traffic routing, and/or selection of the service routing by the Hybrid Access Server in communication with the hybrid access home gateway and/or other components in the network.

LEYMANN C HEIDEMANN DEUTSCHE TELEKOM AG M WESSERMAN PAINLESS SECURITY X XUE D ZHANG HUAWEI N: "Hybrid Access Network Architecture; draft-lhwxz-hybrid-access-network-architecture-00.txt",HYBRID ACCESS NETWORK ARCHITECTURE; DRAFT-LHWXZ-HYBRID-ACCESS-NETWORK-ARCHITECTURE-OO.TXT, INTERNET ENGINEERING TASK FORCE, IETF; STANDARDWORKINGDRAFT, INTERNET SOCIETY (ISOC) 4, RUE DES FALAISES CH- 1205 GENEVA, SWITZERLAND, 25 June 2014 (2014-06-25), pages 1-10 discloses a hybrid access network between a CPE and a HAAP wherein bonding is implemented over two interfaces, i.e. DSL and LTE paths.

### SUMMARY

The invention is set out in the appended set of claims. Embodiments of the present invention provide Z service traffic processing methods, a home gateway, a hybrid access aggregation point, a network system and a computer-readable storage medium, which implement fine control of service traffic transmission. The following aspects of the present invention are provided to provide a better understanding of the invention.

### BRIEF DESCRIPTION OF DRAWINGS

To describe the technical solutions in the embodiments of the present invention or in the prior art more clearly, the following briefly describes the accompanying drawings required for describing the embodiments or the prior art. Apparently, the accompanying drawings in the following description show some embodiments of the present invention, and persons of ordinary skill in the art may still derive other drawings from these accompanying drawings without creative efforts.
FIG. 1 is a schematic diagram of an HAAP network networking structure on which a service traffic processing method is based according to the present invention;
FIG. 2 is a flowchart of a service traffic processing method according to Embodiment 1 of the present invention;
FIG. 3 is a flowchart of a service traffic processing method according to Embodiment 2 of the present invention;
FIG. 4 is a flowchart of a service traffic processing method according to Embodiment 3 which is not encompassed by the wording of the claims;
FIG. 5 is a schematic structural diagram of a service traffic processing apparatus according to Embodiment 4 of the present invention;
FIG. 6 is a schematic structural diagram of a service traffic processing apparatus according to Embodiment 5 of the present invention; and
FIG. 7 is a schematic structural diagram of a service traffic processing apparatus according to Embodiment 6 of the present invention.

### DESCRIPTION OF EMBODIMENTS

To make the objectives, technical solutions, and advantages of the embodiments of the present invention clearer, the following clearly and completely describes the technical solutions in the embodiments of the present invention with reference to the accompanying drawings in the embodiments of the present invention. Apparently, the described embodiments are some but not all of the embodiments of the present invention. All other embodiments obtained by persons of ordinary skill in the art based on the embodiments of the present invention without creative efforts shall fall within the protection scope of the present invention, the scope being solely defined by the appended set of claims.

Embodiments 1, 2, 4, 5 and 6 are covered by the claimed invention. Embodiment 3 is not encompassed by the wording of the claims but is considered useful for understanding the invention.

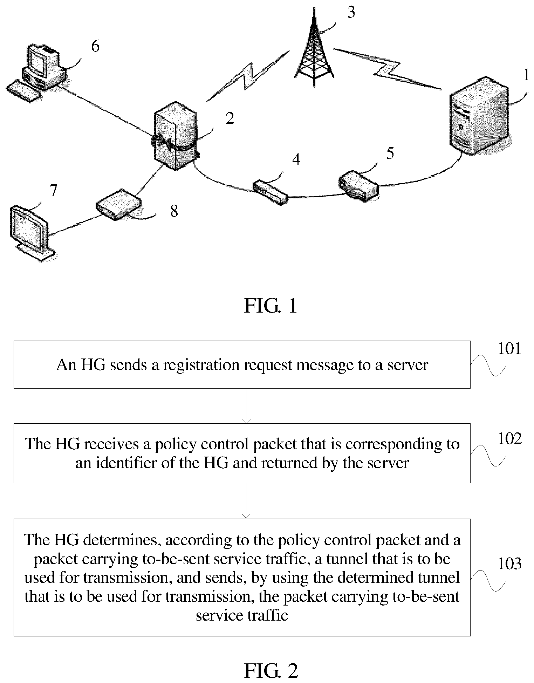

FIG. 1 is a schematic diagram of an HAAP network networking structure on which a service traffic processing method is based according to an embodiment of the present invention. As shown in FIG. 1, the HAAP network networking structure includes a server 1, a home gateway 2, a base station 3, a DSL access multiplexer 4, a gateway control device 5, and user equipment. The user equipment includes terminal devices such as a computer 6, a television 7, and a set-top box 8. Two communications links are established between the HAAP server 1 and the home gateway 2. One is a GRE over LTE link established for accessing a wireless core network by using the base station 3, and the other is a GRE over DSL link established by using the DSL access multiplexer (Digital Subscriber Line Access Multiplexer, DSLAM for short) 4 and a broadband network gateway (Broadband Network Gateway, BNG for short) 5. The two links jointly form one HAAP tunnel. User equipment (for example, the computer 6, and the set-top box 8 connected to the television 7) of the home gateway 2 may transmit service traffic by using the GRE over LTE link or the GRE over DSL link.

### Embodiment 1

FIG. 2 is a flowchart of a service traffic processing method according to Embodiment 1 of the present invention. As shown in FIG. 2, the method in this embodiment includes the following steps.

101. An HG sends a registration request message to a server.

The registration request message includes an identifier of the HG, so that the server obtains, according to the identifier of the HG, a policy control packet corresponding to the identifier of the HG.

In this embodiment, for example, the server may be an HAAP server, or may be another server, which is not limited herein. A series of rules are preset on the server. After the server receives a policy control packet generation command, the server generates different policy control packets by using multiple rules and according to the command. The server obtains the corresponding policy control packet according to the identifier of the HG when receiving the registration request message that includes the identifier of the HG. Specifically, the identifier of the HG is an identifier of the HG itself, for example, an Internet Protocol (Internet Protocol, IP for short) address of the HG. The server divides multiple HGs into several groups in advance, and allocates one group identifier to each group. The server may identify, according to the IP address of the HG, a group in which the HG is located, obtain a group identifier of the group in which the HG is located, and obtain, according to the group identifier of the group in which the HG is located, the policy control packet corresponding to the HG.

In addition, in this embodiment, the policy control packet is obtained by means of extension on the basis of an existing Generic Routing Encapsulation (Generic Routing Encapsulation, GRE for short) packet. For example, when a protocol number carried in the GRE packet is 0x0101, it is indicated that the GRE packet carries an HAAP protocol packet (where the HAAP protocol packet is a packet used for communication between an HAAP server and an HG). An enumerated value 8 may be added to a MsgType field in the HAAP protocol packet to represent the policy control packet. A format of the policy control packet is shown in Table 1.

**Table 1 Format of the policy control packet**

| **Message header** | **1 byte** | **Message type + Tunnel type** |
|---|---|---|
| AVP | 1 byte | avp_type |
| | 2 bytes | avp_length |
| | 4 bytes | commit_time |
| | 2 bytes | packet_sum |
| | 2 bytes | packet_id |
| | Variable length | filter_list_tlv |
| AVP | 1 byte | end_avp |

In Table 1, the policy control packet includes the message header, avp_type, avp_length, commit_time, packet_sum, packet_id, filter_list_tlv, and end_avp, where avp_type indicates a packet format type of the policy control packet, avp_length indicates a packet length of the policy control packet, commit_time is a sending time of the policy control packet, packet_sum indicates a total quantity of fragments of the policy control packet, packet_id indicates a fragment sequence of a current policy control packet, filter_list_tlv indicates a specific rule in the policy control packet, and end_avp indicates an end of the policy control packet.

102. The HG receives a policy control packet that is corresponding to an identifier of the HG and returned by the server.

In this embodiment, the policy control packet received by the HG includes one or more rules. These rules may be of different types, or may be of a same type. Specifically, a type of rule in the policy control packet may be shown in Table 2.

**Table 2 Type of the rule in the policy control packet**

| **filter_list_tlv** | | | | | | | | | |
|---|---|---|---|---|---|---|---|---|---|
| Filter type | | TLV format | | | | | | | Description |
| | | TYPE | LEN GTH | VALUE | | | | | |
| | | | | Enable | Description length | Description Value | Filter value | Value Object | |
| | | 2 Bytes | 2 Bytes | 2 Bytes | 2 Bytes | 0-32 bytes | 0-256 bytes | | |
| Filter list | FQDN | 0x0001 | | 0x0001 | | 0-32 bytes | | String | FQDN value |
| | DSCP | 0x0002 | | 0x0001 | | 0-32 bytes | | integer | DSCP value |
| | DSTPORT | 0x0003 | | 0x0001 | | 0-32 bytes | | integer | Single destination |
| | | | | | | | | | port. |
| | DSTIP | 0x0004 | | 0x0001 | | 0-32 bytes | | String | Destination IPv4 address with mask or destination IPv6 address with mask. |
| | DSTIPPORT | 0x0005 | | 0x0001 | | 0-32 bytes | | String | Destination IPv4 address with mask and port or destination IPv6 address with mask and port |
| | SRCPORT | 0x0006 | | 0x0001 | | 0-32 bytes | | integer | Single source port. |
| | SRCIP | 0x0007 | | 0x0001 | | 0-32 bytes | | String | Source IPv4 address with mask or source IPv6 address with mask. |
| | SRCIP PORT | 0x0008 | | 0x0001 | | 0-32 bytes | | String | Source IPv4 address with mask and port or source IPv6 address with mask and port |
| | SRC HW | 0x0009 | | 0x0001 | | 0-32 bytes | | String | Source MAC address |
| | PROTOCOL | 0x000A | | 0x0001 | | 0-32 bytes | | String | Only four types of protocols: "TCP", |
| | | | | | | | | | "UDP", "HTTP", "SIP" |
| | End TLV | 0xFFFF | NA | NA | NA | NA | NA | NA | End TLV |
| | Example | 0x0004 | 0x0013 | 0x0001 | 0x0003 | aaa | 12.12. 12.12/ 32 | | Telekom list "aaa" is destination IP address 12.12.12.12/ 32 |

In Table 2, a filter type is a type of the rule in the policy control packet. A specific type includes a fully qualified domain name (Fully Qualified Domain Name, FQDN for short), a differentiated services code point (Differentiated Services Code Point, DSCP for short), a destination port (destination port, DSTPORT for short), a destination IP (destination Internet Protocol, DSTIP for short), a destination IP port DSTIPPORT, a source port (Single source port, SRCPORT for short), a source IP (source IP, SRCIP for short), a source IP port SRCIPPORT, a source Media Access Control MAC address SRCHW, and a protocol PROTOCOL. It should be noted that some types of the rule in the policy control packet are listed in this embodiment, and the rule in the policy control packet may be of another type and/or another format, which is not limited in the present invention. Another rule type and rule format may be set in an actual operation.

In this embodiment, for example, the policy control packet received by the HG includes two rules: a first rule and a second rule. A type of the first rule is an FQDN, a type of the second rule is a DSCP, and the type of the first rule is different from the type of the second rule. If both of the types of the two rules (for example, the first rule and the second rule) in the policy control packet received by the HG are a DSTIP, although a filter value corresponding to the type DSTIP of the first rule is 12.12.12.12/32, and a filter value corresponding to the type DSTIP of the second rule is 12.12.12.12/57, the two rules (for example, the first rule and the second rule) are of the same type, that is, the DSTIP.

In addition, the HG receives the policy control packet returned by the server. When there are more rules in the policy control packet received by the HG from the server, a capacity of the policy control packet is larger. The policy control packet may be a fragmented policy control packet. After receiving all fragments of the same policy control packet, the HG sends a policy control ACK packet to the server to acknowledge that the sending succeeds. A format of the policy control ACK packet is shown in Table 3.

In this embodiment, the policy control ACK packet is also obtained by means of extension on the basis of an existing GRE packet. For example, when a protocol number carried in the GRE packet is 0x0101, it is indicated that the GRE packet carries an HAAP protocol packet (where the HAAP protocol packet is a packet used for communication between an HAAP server and an HG). An enumerated value 30 may be added to a MsgType field in the HAAP protocol packet to represent the policy control ACK packet. Specifically, the format of the policy control ACK packet is shown in Table 3.

**Table 3 Format of the policy control ACK packet**

| **Message header** | **1 byte** | **Message type + Tunnel type** |
|---|---|---|
| AVP | 1 byte | avp_type |
| | 2 bytes | avp_length |
| | 4 bytes | commit_time |
| | 1 byte | error_code |
| AVP | 1 byte | end_avp |

In Table 3, the policy control ACK packet includes the message header, error_code, avp_type, avp_length, commit_time, and end_avp, where error_code indicates a packet error code, and content indicated by avp_type, avp_length, commit_time, and end_avp is the same as that in Table 1. Details are not described herein again.

103. The HG determines, according to the policy control packet and a packet carrying to-be-sent service traffic, a tunnel that is to be used for transmission, and sends, by using the determined tunnel that is to be used for transmission, the packet carrying to-be-sent service traffic.

In this embodiment, for example, if service traffic to be sent by an HG user is voice service traffic, the HG determines, according to the policy control packet and the packet carrying to-be-sent service traffic, the tunnel that is to be used for transmission is a DSL-only link, so as to ensure voice quality. If service traffic to be sent by an HG user is general Internet access service traffic, the HG determines, according to the policy control packet and the packet carrying to-be-sent service traffic, the tunnel that is to be used for transmission is an HAAP tunnel. However, the present invention is not limited thereto. The rule in the policy control packet and the packet carrying to-be-sent service traffic may be set according to an actual requirement, so that different service traffic enters, for transmission, tunnels that meet corresponding requirements.

According to the service traffic processing method provided in this embodiment, an HG sends a registration request message that includes an identifier of the HG to a server, the HG receives a policy control packet that is corresponding to the identifier of the HG and returned by the server, and the HG determines, according to the policy control packet and a packet carrying to-be-sent service traffic, a tunnel that is to be used for transmission, and sends, by using the tunnel that is to be used for transmission, the packet carrying to-be-sent service traffic. Because the HG may compare the packet carrying to-be-sent service traffic with the policy control packet, to determine a transmission tunnel that is corresponding to the packet carrying to-be-sent service traffic, fine control of service traffic transmission is implemented by the HG.

On the basis of the foregoing Embodiment 1, the service traffic processing method further includes step 104 (not shown in the figure).

104. The HG receives a policy control update packet, and replaces a rule in the policy control packet with a rule in the policy control update packet.

In this embodiment, after the policy control packet on the server is reconfigured, the server sends corresponding policy control update packets to all HGs. After an HG (for example, an HG1) receives a policy control update packet corresponding to an identifier of the HG1, the HG1 replaces an original rule in a policy control packet in the HG1 with a rule in the policy control update packet.

Optionally, in step 104, the replacing a rule in the policy control packet with a rule in the policy control update packet specifically includes: replacing the original rule in the policy control packet with the rule in the policy control update packet if the HG1 determines that a packet sending time of the policy control update packet is later than a packet sending time of the policy control packet. For example, when the HG1 parses the received policy control update packet, if a value of commit_time in the policy control update packet is 2014.06.21.08.32.16, and a value of original commit_time in the policy control packet in the HG1 is 2014.06.21.08.30.24, the HG1 replaces the original rule in the policy control packet with the rule in the policy control update packet.

In this embodiment, an HG receives a policy control update packet, parses the policy control update packet, and replaces an original rule in a policy control packet with a rule in the policy control update packet when a packet sending time of the policy control update packet is later than a packet sending time of the policy control packet. The policy control packet may be dynamically updated according to an actual requirement, which implements dynamic control of service traffic transmission by the HG.

### Embodiment 2

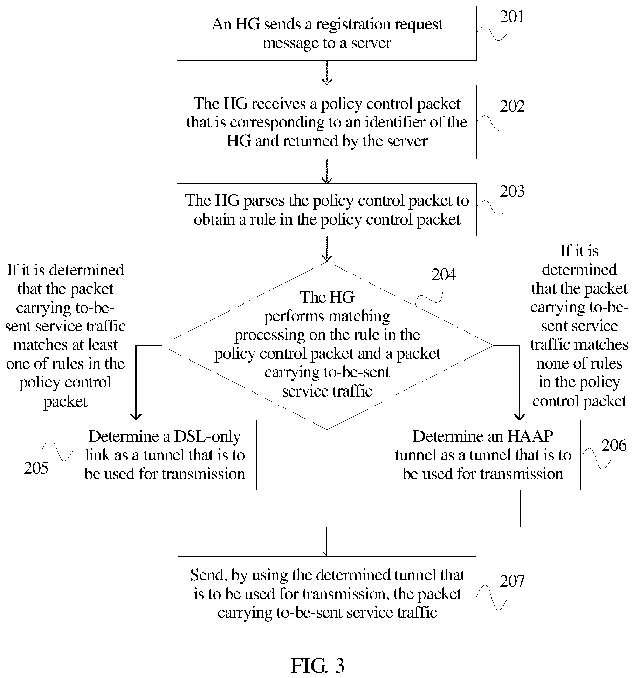

FIG. 3 is a flowchart of a service traffic processing method according to Embodiment 2 of the present invention. As shown in FIG. 3, the method in this embodiment includes the following steps.

201. An HG sends a registration request message to a server.

The registration request message includes an identifier of the HG, so that the server obtains, according to the identifier of the HG, a policy control packet corresponding to the identifier of the HG.

In this embodiment, a series of rules are preset on the server. After the server receives a policy control packet generation command, the server generates different policy control packets by using multiple rules and according to the command. The server obtains the corresponding policy control packet according to the identifier of the HG when receiving the registration request message that includes the identifier of the HG. Specifically, the identifier of the HG is an identifier of the HG itself, for example, an IP address of the HG. The server divides multiple HGs into several groups in advance, and allocates one group identifier to each group. The server may identify, according to the IP address of the HG, a group in which the HG is located, obtain a group identifier of the group in which the HG is located, and obtain, according to the group identifier of the group in which the HG is located, the policy control packet corresponding to the HG.

202. The HG receives a policy control packet that is corresponding to an identifier of the HG and returned by the server.

In this embodiment, step 201 and step 202 are the same as step 101 and step 102 in the foregoing Embodiment 1, and details are not described herein again.

203. The HG parses the policy control packet to obtain a rule in the policy control packet.

In this embodiment, a format of the policy control packet received by the HG is shown in Table 1 in the foregoing Embodiment 1. The HG parses the policy control packet to obtain a field with a rule, that is, content of a filter_list_tlv field, and the content of the filter_list_tlv field is the rule that is carried in the policy control packet corresponding to the identifier of the HG.

204. The HG performs matching processing on the rule in the policy control packet and a packet carrying to-be-sent service traffic; and performs step 205 if it is determined that the packet carrying to-be-sent service traffic matches at least one of rules in the policy control packet; or performs step 206 if it is determined that the packet carrying to-be-sent service traffic matches none of rules in the policy control packet.

205. Determine a DSL-only link as a tunnel that is to be used for transmission, and perform step 207.

206. Determine an HAAP tunnel as a tunnel that is to be used for transmission.

Specifically, the technical solution in this embodiment is described in detail by using a rule of a DSTIP type as an example. Packets that carry to-be-sent service traffic and are to be sent by the HG are IP packets, and include fields such as a source MAC address, a destination MAC address, a source IP address, a DSTIP, and a protocol number. The HG parses the received policy control packet, and obtains the rule in the policy control packet by means of parsing. For example, a type code of a rule is 0x0004, that is, the rule is a DSTIP. A filter value corresponding to the DSTIP is 12.12.12.12/32. The HG further parses the packet carrying to-be-sent service traffic. If a filter value corresponding to a DSTIP in the packet carrying to-be-sent service traffic is 12.12.12.12/32, it is considered that the packet carrying to-be-sent service traffic matches the rule. If a filter value corresponding to a DSTIP in the packet carrying to-be-sent service traffic is not 12.12.12.12/32, it is considered that the packet carrying to-be-sent service traffic does not match the rule of a DSTIP type, and then the HG continues to determine, according to the foregoing method, another rule in the policy control packet and another field in the packet carrying to-be-sent service traffic, to check whether the another rule in the policy control packet matches the another field in the packet carrying to-be-sent service traffic, and if the packet carrying to-be-sent service traffic matches any one of the rules in the policy control packet corresponding to the HG, determines the DSL-only link as the tunnel that is to be used for transmission, or if the packet carrying to-be-sent service traffic matches none of the rules in the policy control packet corresponding to the HG, determines the HAAP tunnel as the tunnel that is to be used for transmission.

207. Send, by using the determined tunnel that is to be used for transmission, the packet carrying to-be-sent service traffic.

In this embodiment, after determining the tunnel that is to be used for transmission, the HG sends, by using the tunnel that is to be used for transmission, the packet carrying to-be-sent service traffic.

According to the service traffic processing method provided in this embodiment, an HG sends a registration request message that includes an identifier of the HG to a server, the HG receives a policy control packet that is corresponding to the identifier of the HG and returned by the server, and the HG obtains a rule in the policy control packet by means of parsing; performs matching processing on the rule and a packet carrying to-be-sent service traffic; if it is determined that the packet carrying to-be-sent service traffic matches at least one of rules in the policy control packet, determines a DSL-only link as a tunnel that is to be used for transmission, or if it is determined that the packet carrying to-be-sent service traffic matches none of rules in the policy control packet, the HG determines an HAAP tunnel as a tunnel that is to be used for transmission; and sends, by using the tunnel that is to be used for transmission, the packet carrying to-be-sent service traffic, so that the HG specifically controls, according to the policy control packet, different service traffic to enter different tunnels for transmission, which implements fine control of service traffic transmission by the HG.

On the basis of the foregoing Embodiment 2, the service traffic processing method further includes step 208 (not shown in the figure).

208. The HG receives a policy control update packet, and replaces the rule in the policy control packet with a rule in the policy control update packet.

In this embodiment, after the policy control packet on the server is reconfigured, the server sends, to all HGs, policy control update packets corresponding to identifiers of the HGs. After an HG (for example, an HG1) receives a policy control update packet corresponding to an identifier of the HG1, the HG1 parses the policy control update packet to obtain a rule in the policy control update packet, and replaces, with the rule in the policy control update packet, all rules in a policy control packet that are originally stored in the HG1.

Optionally, in step 208, the replacing the rule in the policy control packet with a rule in the policy control update packet specifically includes: replacing the rule in the policy control packet with the rule in the policy control update packet if the HG1 determines that a packet sending time of the policy control update packet is later than a packet sending time of the policy control packet. For example, when the HG1 parses the received policy control update packet, if a value of commit_time in the policy control update packet is 2014.06.21.08.32.16, and a value of original commit_time in the policy control packet in the HG1 is 2014.06.21.08.30.24, the HG1 replaces, with the rule in the policy control update packet, all the original rules in the policy control packet that are obtained by means of parsing.

In this embodiment, an HG receives a policy control update packet, parses the policy control update packet, and replaces an original rule in a policy control packet with a rule in the policy control update packet when a packet sending time of the policy control update packet is later than a packet sending time of the policy control packet. The policy control packet may be dynamically updated according to an actual requirement, which implements dynamic control of service traffic transmission by the HG.

### Embodiment 3

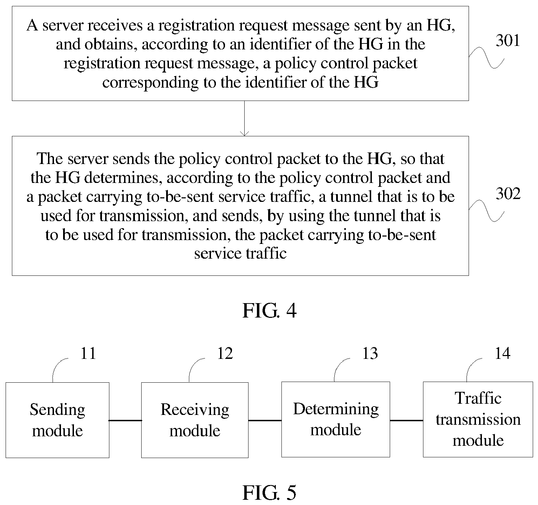

FIG. 4 is a flowchart of a service traffic processing method according to Embodiment 3 which is not encompassed by the wording of the claims but is considered useful for understanding the invention. As shown in FIG. 4, the method in this embodiment includes the following steps.

301. A server receives a registration request message sent by an HG, and obtains, according to an identifier of the HG in the registration request message, a policy control packet corresponding to the identifier of the HG.

In this embodiment, a series of rules are preset on the server. After the server receives a policy control packet generation command, the server generates different policy control packets by using multiple rules and according to the command. The server obtains the corresponding policy control packet according to the identifier of the HG when receiving the registration request message that includes the identifier of the HG. Specifically, the identifier of the HG is an identifier of the HG itself, for example, an IP address of the HG. The server divides multiple HGs into several groups in advance, and allocates one group identifier to each group. The server may identify, according to the IP address of the HG, a group in which the HG is located, obtain a group identifier of the group in which the HG is located, and obtain, according to the group identifier of the group in which the HG is located, the policy control packet corresponding to the HG.

In addition, in this embodiment, for example, the server may be an HAAP server, or may be another server, which is not limited herein. The identifier of the HG is an identifier of the HG itself, for example, an Internet Protocol (Internet Protocol, IP for short) address of the HG. The server divides multiple HGs into several groups in advance, and allocates one group identifier to each group. The server may identify, according to the IP address of the HG, a group in which the HG is located, obtain a group identifier of the group in which the HG is located, and obtain, according to the group identifier of the group in which the HG is located, the policy control packet corresponding to the group identifier of the HG.

In this embodiment, the policy control packet is obtained by means of extension on the basis of an existing GRE packet. For example, when a protocol number carried in the GRE packet is 0x0101, it is indicated that the GRE packet carries an HAAP protocol packet (where the HAAP protocol packet is a packet used for communication between an HAAP server and an HG). An enumerated value 8 may be added to a MsgType field in the HAAP protocol packet to represent the policy control packet, or an enumerated value 30 may be added to a MsgType field in the HAAP protocol packet to represent a policy control ACK packet. Specifically, a format of the policy control packet is shown in Table 1 in the foregoing Embodiment 1, and a format of the policy control ACK packet is shown in Table 3 in the foregoing Embodiment 1.

In this embodiment, the HG is configured to send the registration request message to the server. The registration request message includes the identifier of the HG, so that the server obtains, according to the identifier of the HG, the policy control packet corresponding to the identifier of the HG.

302. The server sends the policy control packet to the HG, so that the HG determines, according to the policy control packet and a packet carrying to-be-sent service traffic, a tunnel that is to be used for transmission, and sends, by using the tunnel that is to be used for transmission, the packet carrying to-be-sent service traffic.

In this embodiment, the server sends the policy control packet to the HG. After receiving the policy control packet, the HG determines, according to a rule in the policy control packet and the packet carrying to-be-sent service traffic, that the packet carrying to-be-sent service traffic enters the corresponding tunnel that is to be used for transmission, and sends, by using the tunnel that is to be used for transmission, the packet carrying to-be-sent service traffic. For example, by using the policy control packet, voice traffic on the HG may be controlled to enter a DSL-only link for transmission, and general Internet access traffic may be controlled to enter an HAAP tunnel for transmission.

For a specific implementation method, refer to the implementation method of step 203 and step 204 in the foregoing Embodiment 2. Details are not described herein again.

In this embodiment, the server may fragment the policy control packet, and send a fragmented policy control packet to the HG. The HG sends a policy control ACK packet to the server after receiving all fragmented policy control packets of the same policy control packet. If the server does not receive the policy control ACK packet within a preset time after sending the policy control packet to the HG, the server resends the policy control packet to the HG. If the policy control ACK packet replied by the HG is still not received after resending is performed for a preset quantity of times, the server clears related information of the HG, and the HG automatically gets offline. For example, after the server sends all the fragmented policy control packets of the same policy control packet to the HG, if the policy control ACK packet replied by the HG is not received within the preset time, the server resends the policy control packet to the HG according to a delay of 3 seconds, 5 seconds, or 7 seconds. If the policy control ACK packet replied by the HG is still not received within the preset time after resending is performed three times, the server clears the related information of the HG. Because the HG sends a heartbeat detection message to the server according to a particular time interval, when the HG still does not receive, after sending the heartbeat detection message multiple times, a heartbeat detection ACK message returned by the server, the HG automatically gets offline.

In this embodiment, the HG may perform step 102 and step 103 in the foregoing Embodiment 1, or may perform step 202 to step 207 in the foregoing Embodiment 2, and details are not described herein again.

According to the service traffic processing method provided in this embodiment, a server sends a registration request message that includes an identifier of an HG to the HG, and the server obtains, according to the identifier of the HG, a policy control packet corresponding to the identifier of the HG, and sends the policy control packet to the HG, so that the HG determines, according to the policy control packet and a packet carrying to-be-sent service traffic, a tunnel that is to be used for transmission, and sends, by using the determined tunnel that is to be used for transmission, the packet carrying to-be-sent service traffic. The server controls, by using the policy control packet, different service traffic on the HG to enter different tunnels for transmission, which implements fine control of service traffic transmission by the HG.

Optionally, on the basis of the foregoing Embodiment 3, the service traffic processing method further includes step 303 (not shown in the figure).

303. The server sends a policy control update packet to the HG, where the policy control update packet is used by the HG to replace a rule in the policy control packet with a rule in the policy control update packet.

In this embodiment, after the policy control packet on the server is reconfigured, the server actively sends, to all HGs, policy control update packets corresponding to identifiers of the HGs. After an HG (for example, an HG1) receives a policy control update packet corresponding to an identifier of the HG1, the HG1 parses the policy control update packet to obtain a rule in the policy control update packet, and replaces, with the rule in the policy control update packet, all original rules in the HG1 that are obtained by parsing the policy control packet.

In this embodiment, a server sends a policy control update packet to an HG, so that the HG parses the policy control update packet to obtain a rule in the policy control update packet, and replaces, with the rule in the policy control update packet, a rule that is in the policy control packet and obtained by means of parsing. The policy control packet may be dynamically updated on a server side according to an actual requirement, which implements dynamic control of service traffic transmission by the HG.

### Embodiment 4

FIG. 5 is a schematic structural diagram of a service traffic processing apparatus according to Embodiment 4 of the present invention. As shown in FIG. 5, the apparatus includes: a sending module 11, a receiving module 12, a determining module 13, and a traffic transmission module 14. The sending module 11 is configured to send a registration request message to a server, where the registration request message includes an identifier of an HG, so that the server obtains, according to the identifier of the HG, a policy control packet corresponding to the identifier of the HG. The receiving module 12 is configured to receive the policy control packet that is corresponding to the identifier of the HG and returned by the server. The determining module 13 is configured to determine, according to the policy control packet corresponding to the identifier of the HG and a packet carrying to-be-sent service traffic, a tunnel that is to be used for transmission. The traffic transmission module 14 is configured to send, by using the tunnel that is to be used for transmission, the packet carrying to-be-sent service traffic.

The apparatus in this embodiment executes the technical solution in the method embodiment shown in FIG. 2. Implementation principles and beneficial effects thereof are similar, and details are not described herein again.

Optionally, the service traffic processing apparatus may be disposed on the HG corresponding to the identifier of the HG.

### Embodiment 5

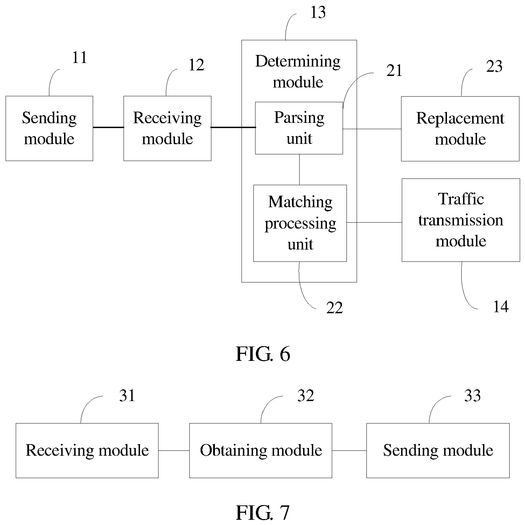

FIG. 6 is a schematic structural diagram of a service traffic processing apparatus according to Embodiment 5 of the present invention. On the basis of the embodiment in FIG. 5, as shown in FIG. 6, the determining module 13 includes: a parsing unit 21 and a matching processing unit 22. The parsing unit 21 is configured to parse the policy control packet to obtain a rule in the policy control packet. The matching processing unit 22 is configured to: perform matching processing on the rule and the packet carrying to-be-sent service traffic; and if it is determined that the packet carrying to-be-sent service traffic matches at least one of rules in the policy control packet, determine a digital subscriber line DSL-only link as the tunnel that is to be used for transmission; or if it is determined that the packet carrying to-be-sent service traffic matches none of rules in the policy control packet, determine a hybrid access aggregation point HAAP tunnel as the tunnel that is to be used for transmission.

The service traffic processing apparatus further includes: a replacement module 23, configured to replace, with a rule in the policy control update packet, the rule that is in the policy control packet and obtained by means of parsing. The receiving module 12 is further configured to receive the policy control update packet. The parsing unit 21 is further configured to parse the policy control update packet to obtain the rule in the policy control update packet.

Optionally, the replacement module 23 is specifically configured to: if a packet sending time of the policy control update packet is later than a packet sending time of the policy control packet, replace, with the update rule, the rule that is in the policy control packet and obtained by means of parsing.

The apparatus in this embodiment executes the technical solution in the method embodiment shown in FIG. 3. Implementation principles and beneficial effects thereof are similar, and details are not described herein again.

Optionally, the service traffic processing apparatus may be disposed on the HG corresponding to the identifier of the HG.

### Embodiment 6

FIG. 7 is a schematic structural diagram of a service traffic processing apparatus according to Embodiment 6 of the present invention. As shown in FIG. 7, the apparatus includes: a receiving module 31, an obtaining module 32, and a sending module 33. The receiving module 31 is configured to receive a registration request message sent by a home gateway HG, where the registration request message includes an identifier of the HG. The obtaining module 32 is configured to obtain, according to the identifier of the HG in the registration request message, a policy control packet corresponding to the identifier of the HG. The sending module 33 is configured to send the policy control packet to the HG, so that the HG determines, according to the policy control packet and a packet carrying to-be-sent service traffic, a tunnel that is to be used for transmission, and sends, by using the determined tunnel that is to be used for transmission, the packet carrying to-be-sent service traffic.

The sending module 33 is further configured to send a policy control update packet to the HG, so that the HG parses the policy control update packet to obtain a rule in the policy control update packet, and replaces, with the rule in the policy control update packet, a rule that is in the policy control packet and obtained by means of parsing.
The apparatus in this embodiment may execute the technical solution in the method embodiment shown in FIG. 4. Implementation principles and beneficial effects thereof are similar, and details are not described herein again.

Persons of ordinary skill in the art may understand that all or some of the steps of the method embodiments may be implemented by a program instructing relevant hardware. The foregoing program may be stored in a computer-readable storage medium. When the program runs, the steps of the method embodiments are performed. The foregoing storage medium includes: any medium that can store program code, such as a ROM, a RAM, a magnetic disk, or an optical disc.

Although the present invention is described in detail with reference to the foregoing embodiments, persons of ordinary skill in the art should understand that they may still make modifications to the technical solutions described in the foregoing embodiments to some or all technical features thereof, without departing from the scope of the technical solutions, as defined by the appended set of claims.

## Claims

1. A service traffic processing method, implemented by a home gateway, HG, comprising:
establishing a hybrid access aggregation point, HAAP, tunnel between the HG and the HAAP, wherein the HAAP tunnel is a bonded tunnel between the HG and the HAAP formed by bonding a DSL link and a long term evolution, LTE, link;
receiving (102, 202) a policy control packet comprising a first rule from the HAAP,
wherein the policy control packet instructs the HG to send first service traffic matching the first rule only using the DSL link rather than using the HAAP tunnel;
receiving first service traffic matching the first rule;
sending (205, 207) the first service traffic to the HAAP, only using a digital subscriber line, DSL, link rather than using the HAAP tunnel,;
receiving second service traffic not matching the first rule;
sending (206, 207) the second service traffic to the HAAP using the HAAP tunnel; and
receiving (104, 208) a policy control update packet, and replacing the first rule in the policy control packet with a second rule in the policy control update packet.

2. The method according to claim 1, wherein the method further comprises:
after receiving the policy control packet, parsing the policy control packet to obtain the first rule; and
before sending the first service traffic, determining that the packet carrying the first service traffic matches the first rule.

3. The method according to claim 1 or 2, wherein the policy control packet is an extended generic routing encapsulation, GRE, packet.

4. The method according to any one of claims 1 to 3, wherein the policy control packet comprising a filter list type_length_value, TLV, and the filter list TLV comprises the first rule.

5. The method according to any one of claims 1 to 4, wherein the first service traffic is service traffic of a service that has a requirement for real-time performance.

6. The method according to any one of claims 1 to 5, wherein the first service traffic is service traffic of a voice service.

7. The method according to any one of claims 1 to 6, wherein the second service traffic is Internet access service traffic.

8. A service traffic processing method, implemented by a hybrid access aggregation point, HAAP, comprising:
establishing a HAAP tunnel between a home gateway, HG, and the HAAP, wherein the HAAP tunnel is a bonded tunnel between the HG and the HAAP formed by bonding a DSL link and a long term evolution, LTE, link;
sending (102, 202) a policy control packet comprising a first rule to the HG, wherein the policy control packet instructs the HG to send first service traffic matching the first rule only using the DSL link rather than using the HAAP tunnel;
receiving (205, 207) a first service traffic matching a first rule using a digital subscriber line, DSL, link rather than using the HAAP tunnel;
receiving a second service traffic not matching the first rule using the HAAP tunnel; and
sending (104, 208) a policy control update packet to the HG, wherein the policy control update packet comprises a second rule used to replace the first rule in the policy control packet.

9. The method according to claim 8, wherein the policy control packet further instructs the HG to send the second service traffic not matching the first rule using the HAAP tunnel

10. The method according to claim 8 or 9, wherein the policy control packet is an extended generic routing encapsulation, GRE, packet.

11. The method according to any one of claims 8 to 10, wherein the policy control packet comprising a filter list type_length_value, TLV, and the filter list TLV comprises the first rule.

12. The method according to any one of claims 8 to 11, wherein the first service traffic is service traffic of a service that has a requirement for real-time performance.

13. The method according to any one of claims 8 to 12, wherein the first service traffic is service traffic of a voice service.

14. The method according to any one of claims 8 to 13, wherein the second service traffic is Internet access service traffic.

15. A home gateway, HG, wherein the HG is configured to carry out the method of any one of claims 1 to 7.

16. A hybrid access aggregation point, HAAP, wherein the HAAP is configured to carry out the method of any one of claims 8 to 14.

17. A network system, comprising the home gateway, HG, of claim 15 and the hybrid access aggregation point, HAAP, of claim 16.

18. A computer-readable storage medium comprising instructions which, when executed by a computer, cause the computer to carry out the method of any one of claims 1 to 14.

## Patentansprüche

1. Dienstverkehrverarbeitungsverfahren, implementiert durch ein Heimgateway, HG, Folgendes umfassend:
Errichten eines Hybridzugriff-Aggregationspunkt- bzw. HAAP-Tunnels zwischen dem HG und dem HAAP, wobei der HAAP-Tunnel ein gebundener Tunnel zwischen dem HG und dem HAAP ist, gebildet durch Binden einer DSL-Verbindung und einer Long-Term-Evolution- bzw. LTE-Verbindung;
Empfangen (102, 202) eines Richtliniensteuerungspakets, umfassend eine erste Regel, vom HAAP,
wobei das Richtliniensteuerungspaket das HG anweist, ersten Dienstverkehr, der zur ersten Regel passt, nur unter Verwendung der DSL-Verbindung anstatt unter Verwendung des HAAP-Tunnels zu senden;
Empfangen von erstem Dienstverkehr, der zur ersten Regel passt;
Senden (205, 207) des ersten Dienstverkehrs an den HAAP, nur unter Verwendung einer Digital-Subscriber-Line- bzw. DSL-Verbindung anstatt unter Verwendung des HAAP-Tunnels;
Empfangen von zweitem Dienstverkehr, der nicht zur ersten Regel passt;
Senden (206, 207) des zweiten Dienstverkehrs an den HAAP unter Verwendung des HAAP-Tunnels; und
Empfangen (104, 208) eines Richtliniensteuerungsaktualisierungspakets und Ersetzen der ersten Regel im Richtliniensteuerungspaket durch eine zweite Regel im Richtliniensteuerungsaktualisierungspaket.

2. Verfahren nach Anspruch 1, wobei das Verfahren ferner Folgendes umfasst:
nach Empfangen der Richtliniensteuerungspakets, Parsen des Richtliniensteuerungspakets zum Erhalten der ersten Regel; und
vor Senden des ersten Dienstverkehrs, Bestimmen, dass das Paket, das den ersten Dienstverkehr trägt, zur ersten Regel passt.

3. Verfahren nach Anspruch 1 oder 2, wobei das Richtliniensteuerungspaket ein erweitertes "Generic-Routing-Encapsulation"- bzw. GRE-Paket ist.

4. Verfahren nach einem der Ansprüche 1 bis 3, wobei das Richtliniensteuerungspaket einen Filterlistentyp/-länge/-wert (type_length_value, TLV) umfasst und der Filterlisten-TLV die erste Regel umfasst.

5. Verfahren nach einem der Ansprüche 1 bis 4, wobei der erste Dienstverkehr Dienstverkehr eines Dienstes ist, der eine Anforderung für Durchführung in Echtzeit aufweist.

6. Verfahren nach einem der Ansprüche 1 bis 5, wobei der erste Dienstverkehr Dienstverkehr eines Sprachdienstes ist.

7. Verfahren nach einem der Ansprüche 1 bis 6, wobei der zweite Dienstverkehr Internetzugangs-Dienstverkehr ist.

8. Dienstverkehrverarbeitungsverfahren, implementiert durch einen Hybridzugriff-Aggregationspunkt, HAAP, Folgendes umfassend:
Errichten eines HAAP-Tunnels zwischen einem Heimgateway, HG, und dem HAAP, wobei der HAAP-Tunnel ein gebundener Tunnel zwischen dem HG und dem HAAP ist, gebildet durch Binden einer DSL-Verbindung und einer Long-Term-Evolution- bzw. LTE-Verbindung;
Senden (102, 202) eines Richtliniensteuerungspakets, umfassend eine erste Regel, an das HG, wobei das Richtliniensteuerungspaket das HG anweist, ersten Dienstverkehr, der zur ersten Regel passt, nur unter Verwendung der DSL-Verbindung anstatt unter Verwendung des HAAP-Tunnels zu senden;
Empfangen (205, 207) eines ersten Dienstverkehrs, der zu einer ersten Regel passt, unter Verwendung einer Digital-Subscriber-Line- bzw. DSL-Verbindung anstatt unter Verwendung des HAAP-Tunnels;
Empfangen eines zweiten Dienstverkehrs, der nicht zur ersten Regel passt, unter Verwendung des HAAP-Tunnels; und
Senden (104, 208) eines Richtliniensteuerungsaktualisierungspakets an das HG, wobei das Richtliniensteuerungsaktualisierungspaket eine zweite Regel umfasst, die verwendet wird, um die erste Regel im Richtliniensteuerungspaket zu ersetzen.

9. Verfahren nach Anspruch 8, wobei das Richtliniensteuerungspaket ferner das HG anweist, den zweiten Dienstverkehr, der nicht zur ersten Regel passt, unter Verwendung des HAAP-Tunnels zu senden.

10. Verfahren nach Anspruch 8 oder 9, wobei das Richtliniensteuerungspaket ein erweitertes "Generic-Routing-Encapsulation"- bzw. GRE-Paket ist.

11. Verfahren nach einem der Ansprüche 8 bis 10, wobei das Richtliniensteuerungspaket einen Filterlistentyp/-länge/-wert (type_length_value, TLV) umfasst und der Filterlisten-TLV die erste Regel umfasst.

12. Verfahren nach einem der Ansprüche 8 bis 11, wobei der erste Dienstverkehr Dienstverkehr eines Dienstes ist, der eine Anforderung für Durchführung in Echtzeit aufweist.

13. Verfahren nach einem der Ansprüche 8 bis 12, wobei der erste Dienstverkehr Dienstverkehr eines Sprachdienstes ist.

14. Verfahren nach einem der Ansprüche 8 bis 13, wobei der zweite Dienstverkehr Internetzugangs-Dienstverkehr ist.

15. Heimgateway, HG, wobei das HG ausgelegt ist zum Ausführen des Verfahrens nach einem der Ansprüche 1 bis 7.

16. Hybridzugriff-Aggregationspunkt, HAAP, wobei der HAAP ausgelegt ist zum Ausführen des Verfahrens nach einem der Ansprüche 8 bis 14.

17. Netzwerksystem, umfassend das Heimgateway, HG, nach Anspruch 15 und den Hybridzugriff-Aggregationspunkt, HAAP, nach Anspruch 16.

18. Computerlesbares Speichermedium, Anweisungen umfassend, die, wenn sie durch einen Computer ausgeführt werden, den Computer veranlassen, das Verfahren nach einem der Ansprüche 1 bis 14 durchzuführen.

## Revendications

1. Procédé de traitement de trafic de service, mis en oeuvre par une passerelle domestique, HG, comprenant :
l'établissement d'un tunnel de point d'agrégation d'accès hybride, HAAP, entre la HG et le HAAP, dans lequel le tunnel HAAP est un tunnel lié entre la HG et le HAAP formé en reliant une liaison DSL et une liaison d'évolution à long terme, LTE ;
la réception (102, 202) d'un paquet de commande de politique comprenant une première règle à partir de l'HAAP,
dans lequel le paquet de commande de politique ordonne à la HG d'envoyer un premier trafic de service correspondant à la première règle uniquement en utilisant la liaison DSL plutôt qu'en utilisant le tunnel HAAP ;
la réception d'un premier trafic de service correspondant à la première règle ;
l'envoi (205, 207) du premier trafic de service à l'HAAP, en utilisant uniquement une liaison de ligne d'abonné numérique, DSL, plutôt qu'en utilisant le tunnel HAAP ;
la réception d'un second trafic de service ne correspondant pas à la première règle ;
l'envoi (206, 207) du second trafic de service à l'HAAP en utilisant le tunnel HAAP ; et
la réception (104, 208) d'un paquet de mise à jour de commande de politique, et le remplacement de la première règle dans le paquet de commande de politique par une seconde règle dans le paquet de mise à jour de commande de politique.

2. Procédé selon la revendication 1, le procédé comprenant en outre :
après réception du paquet de commande de politique, l'analyse du paquet de commande de politique pour obtenir la première règle ; et
avant l'envoi du premier trafic de service, la détermination du fait que le paquet transportant le premier trafic de service correspond à la première règle.

3. Procédé selon la revendication 1 ou 2, dans lequel le paquet de commande de politique est un paquet d'encapsulation de routage générique étendu, GRE.

4. Procédé selon l'une quelconque des revendications 1 à 3, dans lequel le paquet de commande de politique comprend une liste de filtres type_longueur_valeur, TLV, et la liste de filtres TLV comprend la première règle.

5. Procédé selon l'une quelconque des revendications 1 à 4, dans lequel le premier trafic de service est un trafic de service d'un service qui a une exigence de performances en temps réel.

6. Procédé selon l'une quelconque des revendications 1 à 5, dans lequel le premier trafic de service est un trafic de service d'un service vocal.

7. Procédé selon l'une quelconque des revendications 1 à 6, dans lequel le second trafic de service est un trafic de service d'accès Internet.

8. Procédé de traitement de trafic de service, mis en oeuvre par un point d'agrégation d'accès hybride, HAAP, comprenant :
l'établissement d'un tunnel HAAP entre une passerelle domestique, HG, et le HAAP, dans lequel le tunnel HAAP est un tunnel lié entre la HG et le HAAP formé en reliant une liaison DSL et une liaison d'évolution à long terme, LTE ;
l'envoi (102, 202) d'un paquet de commande de politique comprenant une première règle à la HG, dans lequel le paquet de commande de politique ordonne à la HG d'envoyer le premier trafic de service correspondant à la première règle en utilisant uniquement la liaison DSL plutôt qu'en utilisant le tunnel HAAP ;
la réception (205, 207) d'un premier trafic de service correspondant à une première règle en utilisant une liaison de ligne d'abonné numérique, DSL, plutôt qu'en utilisant le tunnel HAAP ;
la réception d'un second trafic de service ne correspondant pas à la première règle en utilisant le tunnel HAAP ; et
l'envoi (104, 208) d'un paquet de mise à jour de commande de politique à la HG, dans lequel le paquet de mise à jour de commande de politique comprend une seconde règle utilisée pour remplacer la première règle dans le paquet de commande de politique.

9. Procédé selon la revendication 8, dans lequel le paquet de commande de politique ordonne en outre à la HG d'envoyer le second trafic de service ne correspondant pas à la première règle en utilisant le tunnel HAAP.

10. Procédé selon la revendication 8 ou 9, dans lequel le paquet de commande de politique est un paquet d'encapsulation de routage générique étendu, GRE.

11. Procédé selon l'une quelconque des revendications 8 à 10, dans lequel le paquet de commande de politique comprend une liste de filtres type_longueur_valeur, TLV, et la liste de filtres TLV comprend la première règle.

12. Procédé selon l'une quelconque des revendications 8 à 11, dans lequel le premier trafic de service est un trafic de service d'un service qui a une exigence de performances en temps réel.

13. Procédé selon l'une quelconque des revendications 8 à 12, dans lequel le premier trafic de service est un trafic de service d'un service vocal.

14. Procédé selon l'une quelconque des revendications 8 à 13, dans lequel le second trafic de service est un trafic de service d'accès Internet.

15. Passerelle domestique, HG, la HG étant configurée pour exécuter le procédé selon l'une quelconque des revendications 1 à 7.

16. Point d'agrégation d'accès hybride, HAAP, le HAAP étant configuré pour exécuter le procédé selon l'une quelconque des revendications 8 à 14.

17. Système de réseau, comprenant la passerelle domestique, HG, selon la revendication 15 et le point d'agrégation d'accès hybride, HAAP, selon la revendication 16.

18. Support de stockage lisible par ordinateur comprenant des instructions qui, lorsqu'elles sont exécutées par un ordinateur, amènent l'ordinateur à exécuter le procédé selon l'une quelconque des revendications 1 à 14.
